# EUROPÄISCHE PATENTSCHRIFT

(11) **EP 4 175 858 B1**
(45) Veröffentlichungstag und Bekanntmachung des Hinweises auf die Patenterteilung: **21.05.2025**
(21) Anmeldenummer: 21737627.6
(22) Anmeldetag: 29.06.2021
(51) Int. Cl.: B60T 8/17, B60T 8/1755, B60T 8/88

(54) **FAHRZEUGSYSTEM MIT EINEM ESC-FEHLERTOLERANTEM BREMSSYSTEM**
VEHICLE SYSTEM HAVING AN ESC-FAULT-TOLERANT BRAKING SYSTEM
SYSTÈME DE VÉHICULE DOTÉ D'UN SYSTÈME DE FREINAGE À TOLÉRANCE AUX DÉFAILLANCES D'ESC

(30) Priorität: 01.07.2020 DE 102020117322
(43) Veröffentlichungstag der Anmeldung: 10.05.2023
(73) Patentinhaber: ZF CV Systems Global GmbH, 3006 Bern (CH)
(72) Erfinder: DIECKMANN, Thomas, 30982 Pattensen (DE); LÜLFING, Ralph-Carsten, 30826 Garbsen (DE); MICHAELSEN, Arne, 30926 Seelze (DE); MUNKO, Tobias, 30459 Hannover (DE); OTREMBA, Robert, 30952 Ronnenberg (DE); VAN THIEL, Julian, 30938 Grossburgwedel (DE)
(74) Vertreter: Ohlendorf, Henrike
(86) Internationale Anmeldenummer: PCT/EP2021/067791
(87) Internationale Veröffentlichungsnummer: WO 2022/002902

(56) Entgegenhaltungen:
- WO-A1-2019/092150

## Beschreibung

Die Erfindung betrifft ein Fahrzeugsystem für ein Fahrzeug, insbesondere Nutzfahrzeug gemäß dem Oberbegriff des Anspruchs 1.

Insbesondere weist ein solches Fahrzeugsystem ein elektronisch steuerbares pneumatisches Bremssystem und eine elektronisch steuerbare Lenkeinrichtung auf, wobei das elektronisch steuerbare pneumatische Bremssystem mindestens einen ersten Bremskreis, mindestens einen zweiten Bremskreis, eine zentrale Steuereinheit zum Steuern des ersten und zweiten Bremskreises und wenigstens erste und zweite Vorderachsbremsaktuatoren für wenigstens erste und zweite Vorderräder an wenigstens einer Vorderachse sowie wenigstens erste und zweite Hinterachsbremsaktuatoren für wenigstens erste und zweite Hinterräder an wenigstens einer Hinterachse aufweist. Die zentrale Steuereinheit weist ferner eine elektronische Stabilitätsregelung auf oder ist mit dieser verbunden, welche zum radindividuellen Betätigen der ersten und zweiten Vorderachsbremsaktuatoren und/oder der ersten und zweiten Hinterachsbremsaktuatoren ausgebildet ist. Ferner umfasst das elektronisch steuerbare pneumatische Bremssystem eine redundante Steuereinheit, die im Falle eines Ausfalls der elektronischen Stabilitätsregelung während einer Fahrt des Fahrzeugs den ersten Bremskreis und/oder den zweiten Bremskreis steuert. Die Erfindung betrifft ferner ein Verfahren zum Verzögern und Lenken eines Fahrzeugs, insbesondere Nutzfahrzeugs, vorzugsweise aufweisend ein Fahrzeugsystem der eingangs genannten Art sowie ein Fahrzeug, insbesondere Nutzfahrzeug, mit einem Fahrzeugsystem der eingangs genannten Art.

In Nutzfahrzeugen werden in der Regel pneumatische Bremssystem eingesetzt, die über zwei oder mehr Bremskreise verfügen. Beispielsweise ist ein erster Bremskreis für die Vorderachse und ein zweiter Bremskreis ist für die Hinterachse vorgesehen. Alternativ ist es auch denkbar, dass ein erster Bremskreis für die linke Fahrzeugseite und ein zweiter Bremskreis für die rechte Fahrzeugseite vorgesehen ist. Auch eine Überkreuzschaltung kann bevorzugt sein. Darüber hinaus können elektronisch steuerbare pneumatische Bremssysteme auch einen dritten Bremskreis aufweisen, der beispielsweise für eine Feststellbremseinrichtung vorgesehen ist und/oder einen Anhänger versorgt.

Im Rahmen der weiter zunehmenden Autonomisierung von Fahrzeugen, insbesondere Fahrzeugen auf SAE-Level 3, 4 oder 5, ist es notwendig, dass derartige Bremssysteme auch im Falle eines Fehlers, das heißt, wenn ein oder mehrere Module, elektrische Steuereinheiten oder andere Komponenten ausfallen, sicher bremsen kann. Bekannte Lösungen für sogenannte FOBS (Fail-Operational Brake Systems) zielen primär auf eine Restverfügbarkeit bei Einfachfehlern hin, um das Fahrzeug in einen sicheren Zustand zu überführen. Die resultierende Rest-Performance ist dabei häufig stark degradiert. Elektronische Stabilitätsregelungen sind meistens nicht mehr gewährleistet.

Bekannt sind beispielsweise solche Systeme, die im Falle eines Fehlers einer zentralen Steuereinheit die Steuerung an eine elektronische Steuereinheit eines weiteren Moduls, wie beispielsweise die eines Vorderachs- oder Hinterachsmodulators, übergeben. Auch gibt es Systeme, bei denen eine elektronische Steuereinheit eines Parkbremsmoduls die Steuerung des Bremssystems für den Fall eines Fehlers im Zentralmodul übernimmt. Weiterhin existieren Systeme, die rein pneumatische Redundanzen aufbauen, indem beispielsweise Drücke einer Achse an eine andere Achse übergeben werden, um auf diese Weise wenigstens pneumatisch einen redundanten Druck aussteuern zu können.

Andere Ansätze nutzen Systeme, die vollständig parallel aufgebaut sind. Bei solchen Systemen werden zwei Bremssysteme parallel aufgebaut und wirken beispielsweise über Wechselventile auf einzelne Bremsaktuatoren. Zwar sind diese Systeme vollumfänglich und können einen Großteil der Funktionalitäten des primären Bremssystems abbilden, haben aber einen hohen Montage- und Verkabelungsaufwand und sind somit kostenintensiv.

Aufgabe der vorliegenden Erfindung ist es, ein Bremssystem mit hoher Restverfügbarkeit bereitzustellen, welches auch im Falle eines Fehlers Stabilitätsfunktionen ausüben kann.

Die Erfindung löst die Aufgabe bei einem Fahrzeugsystem der eingangs genannten Art dadurch, dass im Falle des Ausfalls der elektronischen Stabilitätsregelung während einer Fahrt des Fahrzeugs die redundante Steuereinheit wenigstens die Vorderachse mit einem Vorderachs-Redundanzbremsdruck und/oder die Hinterachse mit einem Hinterachs-Redundanzbremsdruck achsenweise ansteuert, und dass die elektronisch steuerbare Lenkeinrichtung querstabilisierende Lenkeingriffe ausführt zum Halten des Fahrzeugs in einem Toleranzkorridor einer vorgegebenen Solltrajektorie des Fahrzeugs.

Die Erfindung basiert auf der Idee, ein fehlertolerantes Bremssystem dadurch zu schaffen, dass in der Rückfallebene, wenn die elektronische Stabilitätsregelung des Primärsystems nicht mehr verfügbar ist, querstabilisierende Regeleingriffe über eine Kombination aus achsenweisen Druckansteuerungen an mindestens einer Achse und überlagerten Lenkeingriffen über eine automatisierte Lenkung ausgeführt werden. Der erste Bremskreis ist vorzugsweise für die Vorderachse vorgesehen und mit den ersten und zweiten Vorderachsbremsaktuatoren verbunden, um diese mit Bremsdruck zu versorgen. Der zweite Bremskreis ist vorzugsweise für die Hinterachse vorgesehen und dementsprechend mit den ersten und zweiten Hinterachsbremsaktuatoren verbunden, um diese mit Bremsdruck zu versorgen. Es soll aber verstanden werden, dass auch andere Konfigurationen möglich sind, beispielsweise kann der erste Bremskreis auch für den ersten Bremsaktuator am linken Vorderrad und den zweiten Bremsaktuator am rechten Hinterrad vorgesehen sein, während der zweite Bremskreis für den zweiten Vorderachsbremsaktuator am rechten Vorderrad und den ersten Hinterachsbremsaktuator am linken Hinterrad vorgese-**Austauschseite** 3a (einzufügen auf Seite 3 nach dem ersten Absatz)

Die WO2019092150A1 beschreibt ein System, durch welches ein wenigstens teilautonomer Betrieb eines Kraftfahrzeugs gesteuert wird, beinhaltend wenigstens eine Sensoreinrichtung, mit welcher die Umgebung des Kraftfahrzeugs charakterisierende Umgebungsdaten erzeugbar sind, eine elektronische Hauptsteuereinheit, welche die Umgebungsdaten von der Sensoreinrichtung empfängt und abhängig von den Umgebungsdaten Stellbefehle in wenigstens eine Einrichtung oder in wenigstens einen Aktuator einsteuert, welche oder welcher bei dem wenigstens teilautonomen Betrieb des Kraftfahrzeugs zum Einsatz kommt, eine erste elektronische Ersatzsteuerungseinheit, welche im Falle eines Fehlers oder Ausfalls der elektronischen Hauptsteuereinheit die Umgebungsdaten von der Sensoreinrichtung empfängt und abhängig von den Umgebungsdaten Stellbefehle in die wenigstens eine Einrichtung oder in den wenigstens einen Aktuator einsteuert, welche oder welcher bei dem wenigstens teilautonomen Betrieb des Kraftfahrzeugs zum Einsatz kommt, wobei eine zweite elektronische Ersatzsteuerungseinheit, welche im Falle eines Fehlers oder Ausfalls der elektronischen Hauptsteuereinheit und der ersten elektronischen Ersatzsteuerungseinheit die Umgebungsdaten von der Sensoreinrichtung empfängt und abhängig von den Umgebungsdaten Stellbefehle in die wenigstens eine Einrichtung oder in den wenigstens einen Aktuator einsteuert, welche oder welcher bei dem wenigstens teilautonomen Betrieb des Kraftfahrzeugs zum Einsatz kommt. hen ist. Sowohl der erste als auch der zweite Bremskreis werden von der zentralen Steuereinheit gesteuert, die ihrerseits Bremsbefehle von einer übergeordneten Einheit, wie insbesondere einer Einheit für autonomes Fahren, empfangen kann. Die zentrale Steuereinheit weist eine elektronische Stabilitätsregelung auf, die es ermöglicht, in bestimmten Bremssituationen radindividuell zu bremsen. Das heißt, den ersten und zweiten Vorderachsbremsaktuatoren sowie den ersten und zweiten Hinterachsbremsaktuatoren werden unterschiedliche Bremsdrücke zugeführt, um so radindividuell bremsen zu können, um die Stabilität des Fahrzeugs zu gewährleisten.

Für den Fall, dass diese elektronische Stabilitätsregelung ausfällt, beispielsweise, weil die zentrale Steuereinheit ausfällt, weil Raddrehzahlsensoren an einem oder mehreren Rädern ausfallen oder andere die elektronische Stabilitätsregelung beeinträchtigende Fehler vorliegen, übernimmt die redundante Steuereinheit die Steuerung des Bremssystems, insbesondere die Steuerung des ersten und zweiten Bremskreises. Für den Fall, dass die redundante Steuereinheit die Steuerung übernimmt, steuert sie wenigstens eine der Achsen, das heißt die Vorderachse und/oder die Hinterachse achsenweise an. Das heißt, an der wenigstens einen Achse, die achsenweise angesteuert wird, wird an den entsprechenden Bremsaktuatoren derselbe Bremsdruck bereitgestellt. Wird beispielsweise nur die Vorderachse achsenweise angesteuert, veranlasst die redundante Steuereinheit, dass an dem ersten Vorderachsbremsaktuator und dem zweiten Vorderachsbremsaktuator derselbe Bremsdruck ausgesteuert wird, unabhängig von etwaigen unterschiedlichen Raddrehzahlen. Ebenso kann die Hinterachse achsenweise angesteuert werden, derart, dass an den ersten und zweiten Hinterachsbremsaktuatoren derselbe Bremsdruck ausgesteuert wird. In dem Fall der achsenweisen Ansteuerung werden der Vorderachs-Redundanzbremsdruck bzw. der Hinterachs-Redundanzbremsdruck entsprechend ausgesteuert. Sollte das Fahrzeug darüber hinaus eine zweite Vorderachse aufweisen, kann diese ebenfalls achsenweise angesteuert werden, ebenso wie eine zweite Hinterachse, Zusatzachse und dergleichen. Weist das Fahrzeug beispielsweise fünf Achsen auf, sind vorzugsweise insgesamt zehn Bremsaktuatoren vorgesehen, wobei jede Achse einzeln achsenweise angesteuert werden kann oder die Ansteuerung von Achsen zu einer oder mehreren Achsgruppen zusammengefasst wird. Im Rahmen der Erfindung kann es aber auch vorgesehen sein, dass nur eine Achse achsenweise angesteuert wird und für die anderen Achsen nach wie vor eine radindividuelle Bremsung ermöglicht ist, beispielsweise mittels redundanter Raddrehzahlsensoren und einer wenigstens teilweise redundanten elektronischen Stabilitätsregelung. Allerdings wird im Rahmen der Erfindung wenigstens eine Achse achsenweise angesteuert. Um dennoch die Stabilität des Fahrzeugs zu gewährleisten, wird die elektronisch steuerbare Lenkeinrichtung dazu veranlasst, querstabilisierende Lenkeingriffe auszuführen, um so das Fahrzeug in einem Toleranzkorridor der vorgegebenen Solltrajektorie des Fahrzeugs zu halten. Über die elektronisch steuerbare Lenkeinrichtung wird daher die nicht mehr radindividuelle Bremsung an der achsenweise angesteuerten Achse durch entsprechende Lenkeingriffe ausgeglichen. Auf diese Weise lässt sich auf einfache Art und Weise immer noch eine Stabilitätsfunktionalität im Bremssystem umsetzen, auch wenn die elektronische Stabilitätsregelung des Primärsystems ausgefallen ist.

Die Solltrajektorie sowie der Toleranzkorridor für die Solltrajektorie werden vorzugsweise von einer Einheit für autonomes Fahren bereitgestellt, beispielsweise über einen Fahrzeug-Bus. Sie können an der zentralen Steuereinheit, der redundanten Steuereinheit und/oder an der oder durch die elektronisch steuerbare Lenkeinrichtung bereitgestellt werden. Vorzugsweise empfangen alle drei Module die Solltrajektorie sowie den Toleranzkorridor. Die elektronisch steuerbare Lenkeinrichtung führt die querstabilisierenden Lenkeingriffe aus, wenn die elektronische Stabilitätsregelung des Primärsystems ausgefallen ist. Es kann auch vorgesehen sein, dass die elektronisch steuerbare Lenkeinrichtung auch zusätzlich eingesetzt wird, während die elektronische Stabilitätsregelung des Primärsystems funktioniert, um so weitere Funktionalitäten zu erzielen.

In einer ersten bevorzugten Ausführungsform empfängt die elektronisch steuerbare Lenkeinrichtung einen Lenkradwinkel und/oder ein Lenkmoment als Sollwert für die querstabilisierenden Lenkeingriffe und regelt diesen bzw. dieses aus. Vorzugsweise ist die elektronisch steuerbare Lenkeinrichtung hierzu mit dem elektronisch steuerbaren pneumatischen Bremssystem, vorzugsweise der redundanten Steuereinheit, der elektronischen Stabilitätsregelung oder einer redundanten elektronischen Stabilitätsregelung und/oder einer Einheit für autonomes Fahren verbunden und dazu ausgebildet, den Lenkradwinkel und/oder das Lenkmoment als Sollwert zu empfangen. Die elektronisch steuerbare Lenkeinrichtung ist dann vorzugsweise ferner dazu eingerichtet, diese zu verarbeiten und in Übereinstimmung mit diesen querstabilisierenden Lenkeingriffe auszuregeln. Dieser Sollwert wird vorzugsweise von dem elektronisch steuerbaren pneumatischen Bremssystem, vorzugsweise der redundanten Steuereinheit, der elektronischen Stabilitätsregelung oder einer redundanten elektronischen Stabilitätsregelung bereitgestellt.

Erfindungsgemäß ist die elektronisch steuerbare Lenkeinrichtung mit der zentralen Steuereinheit verbunden zum Empfangen von ESC-Signalen der elektronischen Stabilitätsregelung oder aus diesen abgeleiteten oder aufbereiteten Signalen. Ein solches abgeleitetes oder aufbereitetes Signal kann insbesondere ein Zusatzlenksignal (z.B. Lenkradwinkel und/oder das Lenkmoment) sein. Vorzugsweise ist die elektronisch steuerbare Lenkeinrichtung auch mit der redundanten Steuereinheit verbunden, um von dieser gegebenenfalls redundante ESC-Signale oder andere Signale zu empfangen, oder um die empfangen ESC-Signale bzw. die aus diesen abgeleiteten oder aufbereiteten Signale an der redundanten Steuereinheit bereitzustellen.

Weiterhin ist bevorzugt, dass das Fahrzeugsystem eine redundante elektronische Stabilitätsregelung aufweist, die mit der redundanten Steuereinheit verbunden ist und an dieser redundante ESC-Signale bereitstellt. Vorzugsweise weist die redundante Steuereinheit die redundante elektronische Stabilitätsregelung auf. Die redundanten ESC-Signale können einerseits dafür verwendet werden, Achsen, die nicht achsenweise angesteuert werden, radweise anzusteuern. Andererseits können die redundanten ESC-Signale auch dazu verwendet werden, die querstabilisierenden Lenkeingriffe mittels der elektronisch steuerbaren Lenkeinrichtung auszuregeln. Die elektronisch steuerbare Lenkeinrichtung kann zu diesem Zweck dazu ausgebildet sein, beim Ausregeln der querstabilisierenden Lenkeingriffe die redundanten ESC-Signale zu berücksichtigen.

Demnach ist vorzugsweise die elektronisch steuerbare Lenkeinrichtung mit der redundanten Steuereinheit oder der redundanten elektronischen Stabilitätsregelung verbunden zum Empfangen von redundanten ESC-Signalen.

Weiterhin ist bevorzugt, dass die zentrale Steuereinheit mit einer ersten Spannungsquelle und die redundante Steuereinheit mit einer zweiten Spannungsquelle verbunden ist, die unabhängig von der ersten Spannungsquelle ist. Gemäß diesem Aspekt werden die zentrale Steuereinheit und die redundante Steuereinheit von zwei separaten, getrennten und unabhängigen Spannungsquellen versorgt. Sollte beispielsweise die elektronische Stabilitätsregelung der zentralen Steuereinheit ausfallen, da die erste Spannungsquelle der zentralen Steuereinheit ausfällt, ist gemäß diesem Aspekt gewährleistet, dass die redundante Steuereinheit nach wie vor mit Spannung versorgt wird. Hierdurch wird die Ausfallsicherheit des Fahrzeugsystems erhöht.

Vorzugsweise ist die elektronisch steuerbare Lenkeinrichtung oder ein Teil von dieser mit der zweiten Spannungsquelle verbunden. Vorzugsweise ist die elektronisch steuerbare Lenkeinrichtung auch mit der ersten Spannungsquelle verbunden. Das heißt, die elektronisch steuerbare Lenkeinrichtung wird sowohl von der ersten Spannungsquelle als auch von der zweiten Spannungsquelle versorgt. Sie ist daher in der Lage, auch wenn die erste Spannungsquelle ausfällt, mit der zweiten Spannungsquelle weiterzuarbeiten, um so die querstabilisierenden Lenkeingriffe auszuregeln.

Gemäß einer weiteren bevorzugten Ausführungsform ist die redundante Steuereinheit mit ersten und/oder zweiten Raddrehzahlsensoren verbunden, zum Empfangen von Raddrehzahlsignalen. Vorzugsweise sind an der Vorderachse erste Raddrehzahlsensoren angeordnet und an der Hinterachse zweite Raddrehzahlsensoren. Insbesondere ist an jedem Vorderrad der Vorderachse jeweils ein Radsensor angeordnet, nämlich erste und zweite Vorderachs-Raddrehzahlsensoren. An der Hinterachse ist vorzugsweise an jedem Hinterrad jeweils ein Raddrehzahlsensor angeordnet, nämlich erste und zweite Hinterachs-Raddrehzahlsensoren. Diese stellen jeweils ein Raddrehzahlsignal bereit, vorzugsweise an der redundanten Steuereinheit. Die ersten und zweiten Raddrehzahlsensoren stellen die Raddrehzahlsignale vorzugsweise auch an der zentralen Steuereinheit sowie gegebenenfalls an weiteren Modulen, wie insbesondere der Einheit für autonomes Fahren, bereit. Auch ist es denkbar bevorzugt, diese Signale über einen Fahrzeug-Bus bereitzustellen.

Vorzugsweise weist das Fahrzeugsystem ferner einen Parkbremskreis mit einem mit der zentralen Steuereinheit verbunden Parkbremsmodul auf, sowie wenigstens ersten und zweiten Federspeicheraktuatoren wenigstens an der Hinterachse oder einer weiteren Hinterachse, wobei die redundante Steuereinheit eine elektronische Steuereinheit des Parkbremsmoduls bildet oder mit dieser integriert ist. Das Parkbremsmodul ist vorzugsweise mit einem dritten Druckluftvorrat verbunden und Teil eines dritten Bremskreises. Die Federspeicheraktuatoren sind vorzugsweise mit den ersten und zweiten Hinterachsbremsaktuatoren integriert, um sogenannte Tristop-Bremsaktuatoren zu bilden. Die redundante Steuereinheit ist gemäß diesem Aspekt vorzugsweise mit der elektronischen Steuereinheit des Parkbremsmoduls integriert oder identisch. Das Parkbremsmodul ist vorzugsweise dazu ausgebildet, in einem Redundanzfall, wenn die zentrale Steuereinheit nicht oder nicht richtig funktioniert, die Steuerung des Bremssystems zu übernehmen. Daher ist das Parkbremsmodul vorzugsweise auch mit der Einheit für autonomes Fahren sowie der zentralen Steuereinheit verbunden und empfängt dieselben Signale.

**In** einer weiteren bevorzugten Ausführungsform ist vorgesehen, dass die redundante Steuereinheit im Falle des Ausfalls der elektronischen Stabilitätsregelung bei dem achsenweisen Aussteuern des Vorderachs-Redundanzbremsdrucks diesen an den ersten und zweiten Vorderachsbremsaktuatoren bereitstellt, um so die Vorderachse achsenweise zu bremsen. Das Gleiche gilt vorzugsweise auch für die Hinterachse. Demnach ist vorzugsweise vorgesehen, dass die redundante Steuereinheit im Falle des Ausfalls der elektronischen Stabilitätsregelung bei dem achsenweisen Aussteuern des Hinterachs-Redundanzbremsdrucks diesen den ersten und zweiten Hinterachsbremsaktuatoren bereitstellt, um so die Hinterachse achsenweise zu bremsen.

In einem zweiten Aspekt löst die Erfindung die eingangs genannte Aufgabe durch ein Verfahren zum Verzögern und Lenken eines Fahrzeugs der eingangs genannten Art mit den Schritten: Ermitteln eines Ausfalls einer elektronischen Stabilitätsregelung eines elektronisch steuerbaren pneumatischen Bremssystems; in Antwort auf das Ermitteln des Ausfalls: redundantes Aussteuern von einem Redundanz-Vorderachsbremsdruck an wenigstens einer Vorderachse und/oder von einem Redundanz-Hinterachsbremsdruck an wenigstens einer Hinterachse mittels einer redundanten Steuereinheit des elektronisch steuerbaren pneumatischen Bremssystems, und Ausführen von querstabilisierenden Lenkeingriffen durch eine elektronisch steuerbare Lenkeinrichtung zum Halten des Fahrzeugs in einem Toleranzkorridor einer vorgegebenen Solltrajektorie des Fahrzeugs.

Der Redundanz-Hinterachsbremsdruck kann sowohl von einem Parkbremsmodul als auch von einem anderen Modul, wie beispielsweise einem Hinterachsmodulator, ausgesteuert werden. Die Redundanz-Hinterachsbremsdruck kann sowohl an Federspeicherbremszylindern als auch an Betriebsbremszylindern an der Hinterachse bereitgestellt werden. Hier sind alle Kombinationen denkbar und bevorzugt.

Es soll verstanden werden, dass das Fahrzeugsystem gemäß dem ersten Aspekt der Erfindung sowie das Verfahren gemäß dem zweiten Aspekt der Erfindung gleiche und ähnliche Unteraspekte haben, wie sie insbesondere in den abhängigen Ansprüchen niedergelegt sind. Insofern wird auch für bevorzugte Ausführungsformen des Verfahrens gemäß dem zweiten Aspekt der Erfindung vollumfänglich auf die obige Beschreibung des Fahrzeugsystems gemäß dem ersten Aspekt der Erfindung verwiesen.

Das Verfahren umfasst vorzugsweise ferner die Schritte: Ermitteln einer Vorderachs-Seitenführungskraft an der Vorderachse; Ermitteln einer Hinterachs-Seitenführungskraft an der Hinterachse; wobei die redundante Steuereinheit eine Bremsdruckaussteuerung an derjenigen Fahrzeugachse aus Vorderachse und Hinterachse erhöht, an der die höhere aus Vorderachs-Seitenführungskraft und Hinterachs-Seitenführungskraft ermittelt ist. Die Seitenführungskräfte können beispielsweise aus dem Fahrzeugmodell ermittelt werden. Die Seitenführungskraft ist eine dynamische Größe die von einem Schräglaufwinkel, einer Radlast, einem Schlupf, einem Radsturz und Reibwerten abhängt. Die Seitenführungskraft ist eine Ausgangsgröße des Fahrzeugmodells das auf Grundlage verschiedener dynamischer Sensordaten (z.B. Quer-, Längsbeschleunigung, Gierrate, Lenkwinkel, Radgeschwindigkeit, Fahrzeuggeschwindigkeit etc.) und statischen Größen wie Fahrzeugmasse, Schwerpunkt, Radstand, Fahrzeuggeometrie etc. den dynamischen Fahrzeugzustand beschreibt. Je nachdem, an welcher der Achsen die höhere Seitenführungskraft herrscht, wird der ausgesteuerte Bremsdruck erhöht bzw. eine Bremsdruckverteilung an den Achsen zu Gunsten der Achse mit der höheren Seitenführungskraft umverteilt. Das heißt, wenn beispielsweise an der Vorderachse eine höhere Seitenführungskraft herrscht als an der Hinterachse, wird von der redundanten Steuereinheit der Vorderachs-Redundanzbremsdruck erhöht.

Erfindungsgemäß umfasst das Verfahren die Schritte: Ermitteln eines Übersteuerns des Fahrzeugs; und in Antwort hierauf: Erhöhen der Bremsdruckaussteuerung des Redundanz-Vorderachsbremsdrucks an der Vorderachse und optional an einem Anhänger; und Lenken mittels der elektronisch steuerbaren Lenkeinrichtung in Richtung Kurven außen. Hierdurch kann das Übersteuern vermindert und das Fahrzeug stabil in der Bahn gehalten werden, auch wenn der Vorderachs-Redundanzbremsdruck nur achsenweise an der Vorderachse ausgesteuert wird. Das Lenken in Richtung Kurven außen mittels der elektronisch steuerbaren Lenkeinrichtung bildet dann einen querstabilisierenden Lenkeingriff im Sinne der Erfindung. Zusätzlich oder alternativ kann das Einbremsen des Anhängers dazu verwendet werden, eine Streckbremsung zu erreichen Weiterhin umfasst das erfindungsgemäße Verfahren die Schritte: Ermitteln eines Untersteuerns des Fahrzeugs; und in Antwort hierauf: Erhöhen der Bremsdruckaussteuerung des Redundanz-Hinterachsbremsdrucks an der Hinterachse und optional an einem Anhänger. Um aus einem Untersteuern herauszukommen, ist in dieser Ausführungsform kein querstabilisierender Lenkeingriff der elektronisch steuerbaren Lenkeinrichtung erforderlich. Vielmehr reicht es aus, die Bremsdruckaussteuerung des Redundanz-Hinterachsbremsdrucks zu erhöhen, insbesondere für den Fall, wenn die Hinterachse achsenweise angesteuert wird. Hierdurch wird das Fahrzeug verzögert und die Untersteuerung reduziert. Eine optionale zusätzliche Einbremsung eines Anhängers, der gegebenenfalls an das Fahrzeug angeschlossen ist, kann vorgesehen sein. Hierdurch kann in einer Variante die Geschwindigkeit des Fahrzeugs samt Anhänger rasch reduziert werden. Es ist aber auch denkbar, diesen absichtlich leicht aufschieben zu lassen bei erhöhter Bremsdruckaussteuerung an der Hinterachse des Fahrzeugs, um das Untersteuern weiter zu verringern. Eine weitere Möglichkeit das Untersteuern zu reduzieren kann mit den Schritten erfolgen: Einstellen eines Lenkwinkels von etwa 0°; Erhöhen einer Bremsdruckaussteuerung an vorzugsweise allen Achsen auf einen Maximalwert, der vorzugsweise noch eine stabile Fahrt erlaub, also vorzugsweise ohne bzw. mit nur wenig Schlupf; beides für eine kurze Zeitdauer; und anschließend: Einstellen eines Lenkradwinkels zum Annährend der Fahrzeugbahn an eine geplante Fahrzeugbahn. In dieser Variante wird hingenommen, dass das Fahrzeug etwas zu weit nach Kurvenaußen gerät, aber die kurzfristige und starke Herausnahme von Geschwindigkeit bringt das Fahrzeug vorzugsweise wieder in einen stabilen Zustand, sodass durch entsprechenden Lenkeingriff das Fahrzeug wieder auf die geplante Bahn geführt werden kann. Diese Varianten können auch kombiniert werden. Beispielsweise kann auch bei einem einfachen Erhöhen der Bremsdruckaussteuerung an der Hinterachse ein Lenkwinkel reduziert werden, um das Fahrzeug in einen stabilen Zustand zu bringen.

In einem dritten Aspekt wird die eingangs genannte Aufgabe gelöst durch ein Fahrzeug, insbesondere Nutzfahrzeug, mit einem Fahrzeugsystem nach einer der vorstehend beschriebenen bevorzugten Ausführungsformen eines Fahrzeugsystems gemäß dem ersten Aspekt der Erfindung. Vorzugsweise ist das Fahrzeugsystem gemäß dem ersten Aspekt der Erfindung, welches in dem Fahrzeug gemäß dem dritten Aspekt der Erfindung eingesetzt wird, dazu ausgebildet, das Verfahren gemäß dem zweiten Aspekt der Erfindung umzusetzen.

Es soll verstanden werden, dass das Fahrzeugsystem gemäß dem ersten Aspekt der Erfindung, das Verfahren gemäß dem zweiten Aspekt der Erfindung sowie das Fahrzeug gemäß dem dritten Aspekt der Erfindung gleiche und ähnliche Unteraspekte aufweisen, wie sie insbesondere in den abhängigen Ansprüchen niedergelegt sind. Insofern wird für besondere Ausführungsformen sowie weitere Merkmale und deren Vorteile des Fahrzeugs vollumfänglich auf die obige Beschreibung Bezug genommen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: ein schematisches Systemlayout der Erfindung;
- Fig. 2: ein Fahrzeug mit einem Fahrzeugsystem gemäß der Erfindung;
- Fig. 3: ein Fahrzeug mit einem Fahrzeugsystem in einem zweiten Ausführungsbeispiel;
- Fig. 4: ein Fahrzeug auf einer Kurvenfahrt; und in
- Fig. 5: einen schematischen Ablauf eines Verfahrens.

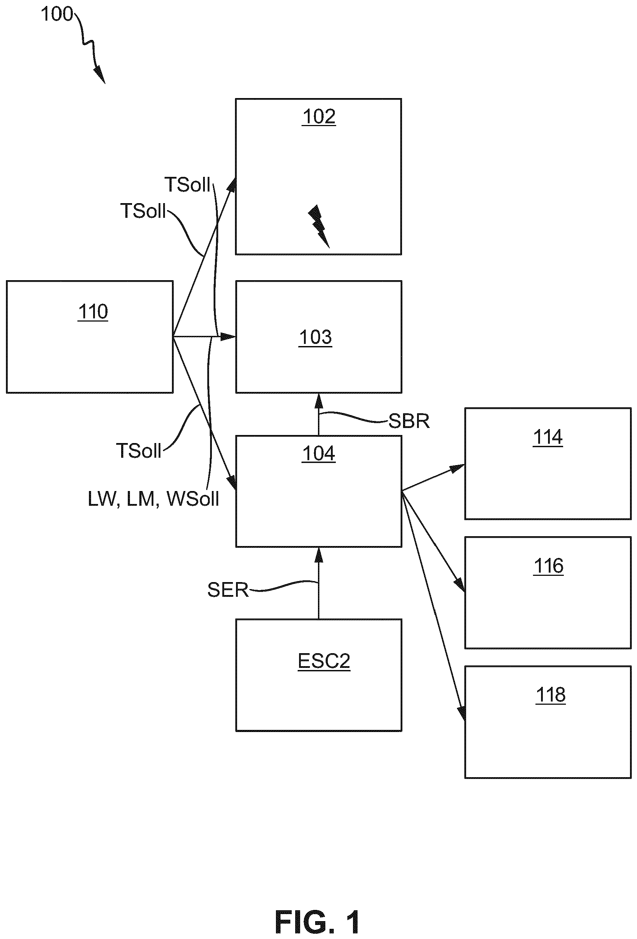

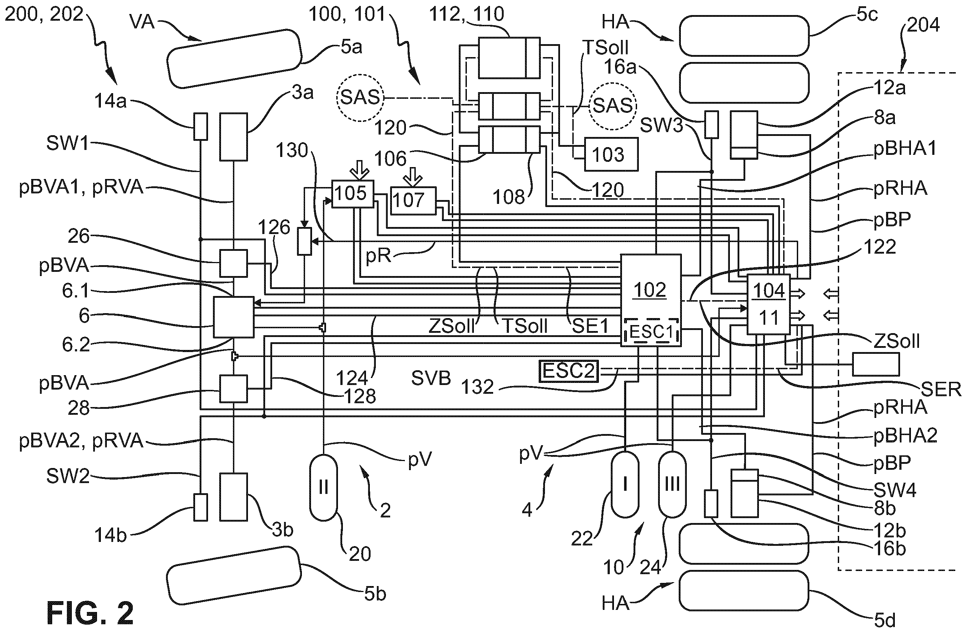

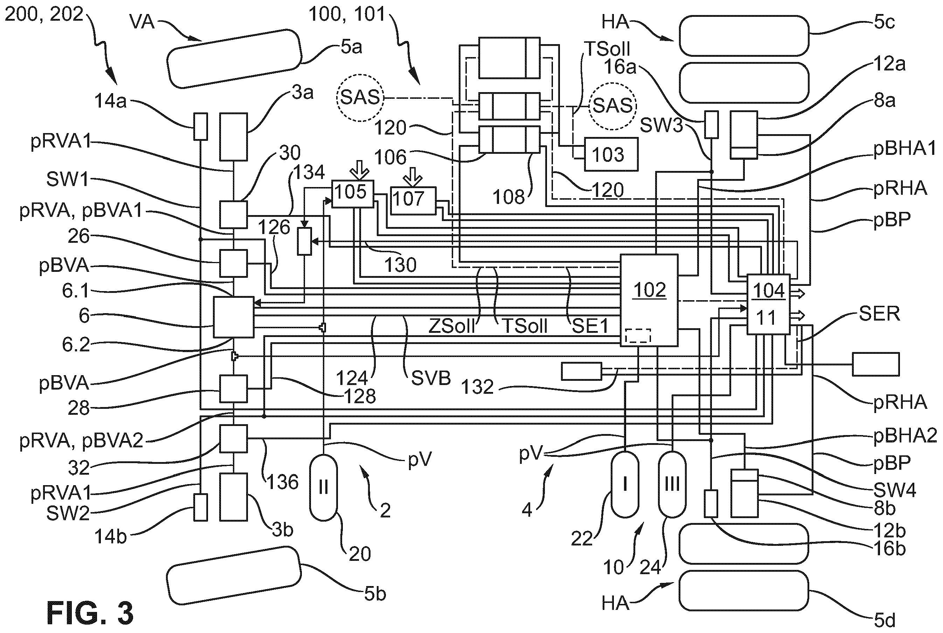

Fig. 1 illustriert zunächst den allgemeinen Aufbau in Form eines Blockschaltbilds des Fahrzeugsystems 100. Das Fahrzeugsystem 100 umfasst eine zentrale Steuereinheit 102, die zum Steuern des elektronisch steuerbaren pneumatischen Bremssystems 101 (vgl. Figuren 2 und 3) vorgesehen ist. Die zentrale Steuereinheit 102 empfängt von einer Solltrajektorien-Steuerung 110 eine Solltrajektorie TSoll. Die Solltrajektorien-Steuerung 110 kann beispielsweise Teil einer Einheit für autonomes Fahren 112 sein (vgl. Figuren 2 und 3), kann aber auch separat innerhalb des Fahrzeugs 200 vorgesehen sein. Ferner ist es möglich, dass die Solltrajektorien-Steuerung 110 in einem Cloud-Dienst vorgesehen ist, oder über einen solchem mit Daten versorgt wird, auf deren Basis dann die Solltrajektorie TSoll generiert wird. Das Fahrzeugsystem 100 umfasst auch eine elektronisch steuerbare Lenkeinrichtung 103. Auch die elektronisch steuerbare Lenkeinrichtung 103 empfängt von der Solltrajektorien-Steuerung 110 die Solltrajektorie TSoll. Die elektronisch steuerbare Lenkeinrichtung 103 ist zum Lenken des Fahrzeugs 200 vorgesehen und kann auf eine oder mehrere Achsen einwirken.

Im Rahmen der Erfindung ist ferner eine redundante Steuereinheit 104 vorgesehen, die für den Fall, dass eine elektronische Stabilitätsregelung ESC1 der zentralen Steuereinheit 102 (vgl. Figuren 2 und 3) ausfällt und/oder nicht mehr richtig funktioniert, die Steuerung des Bremssystems 101 übernimmt. Die redundante Steuereinheit 104 umfasst oder steuert demnach eine sekundäre Vorderachs-Bremssteuerung 114, eine sekundäre Hinterachs-Bremssteuerung 116 und optional eine sekundäre Anhänger-Bremssteuerung 118. Die sekundäre Anhänger-Bremssteuerung 118 ist nur dann vorgesehen, wenn das Fahrzeug 200 zum Ziehen eines Anhängers 204 (vgl. Fig. 2) ausgestattet ist. Anderenfalls kann sie entfallen. Die zentrale Steuereinheit 102 umfasst entsprechend eine primäre Vorderachs-Bremssteuerung, eine primäre Hinterachs-Bremssteuerung und eine primäre Anhänger-Bremssteuerung, wie dies allgemein bekannt ist. Sie sind in Fig. 1 nicht im Detail gezeigt.

Optional ist ferner eine redundante elektronische Stabilitätsregelung ESC2 vorgesehen, die hier mit der redundanten Steuereinheit 104 verbunden ist. Die redundante elektronische Stabilitätsregelung ESC2 kann redundante ESC-Signale SER an der redundanten Steuereinheit 104 bereitstellen, wie dies später noch im Detail beschrieben werden wird. Die redundante Steuereinheit 104 ist ferner mit der elektronisch steuerbaren Lenkeinrichtung 103 verbunden und stellt an dieser redundante Bremssignale SBR bereit, die die redundante Steuereinheit 104 vorzugsweise auch an entsprechende weitere Module in dem Bremssystem 101 bereitstellt, zum Einbremsen bestimmter Achsen.

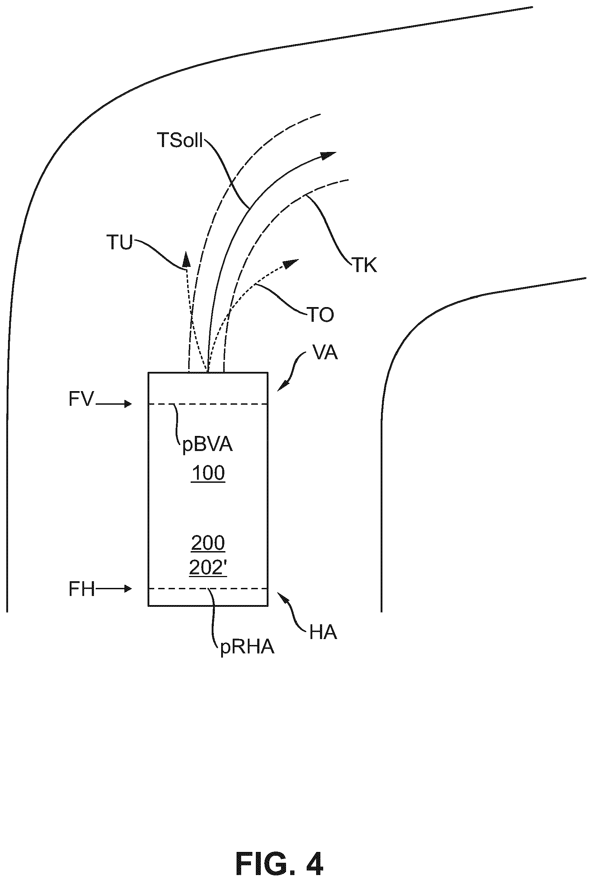

Die redundante Steuereinheit 104 ist dazu vorgesehen, wenigstens eine der Achsen, insbesondere die Vorderachse VA und die Hinterachse HA, im Redundanzfall, das heißt, wenn die redundante Steuereinheit 104 die Steuerung des Bremssystems 101 übernimmt, achsenweise anzusteuern. Bei einer achsenweisen Ansteuerung von einer Achse VA, HA werden an den entsprechenden Bremsaktuatoren dieser Achse VA, HA dieselben Bremsdrücke ausgeregelt. Eine radgerechte Bremsung findet dann an dieser Achse nicht mehr statt. Aus diesem Grund ist die redundante Steuereinheit 104 mit der elektronisch steuerbaren Lenkeinrichtung 103 verbunden, die dann in diesem Fall querstabilisierende Lenkeingriffe ausführt, zum Halten des Fahrzeugs 200 in einem Toleranzkorridor TK einer vorgegebenen Solltrajektorie TSoll (vgl. Fig. 4). Während also im Normalbetrieb die zentrale Steuereinheit 102 selbstständig das Bremssystem 101 steuern kann und eine radgerechte Bremsung erlaubt, agieren im Redundanzfall die redundante Steuereinheit 104 und die elektronisch steuerbare Lenkeinrichtung 103 gemeinsam, um das Fahrzeug 200 auf der Solltrajektorie TSoll zu halten.

Neben der Solltrajektorie TSoll kann die elektronisch steuerbare Lenkeinrichtung 103 auch einen Lenkradwinkel LW sowie ein Lenkmoment LM als Sollwert WSoll für die querstabilisierenden Lenkeingriffe empfangen und diese ausregeln.

Nachdem nun das Fahrzeugsystem 100 in seiner Grundkonzeption beschrieben wurde, zeigen die Figuren 2 und 3 zwei konkrete Umsetzungen des Fahrzeugsystems 100 in einem Fahrzeug 200, nämlich insbesondere in einem Nutzfahrzeug 202. Das Nutzfahrzeug 202 umfasst ein elektronisch steuerbares pneumatisches Bremssystem 101, wie grundlegend zuvor beschrieben. Das elektronisch steuerbare pneumatische Bremssystem hat einen ersten Bremskreis 2, hier in Form eines Vorderachsbremskreises für die Vorderasche VA sowie einen zweiten Bremskreis 4, hier in Form eines Hinterachsbremskreises für die Hinterachse HA. Der erste Bremskreis 2 wird von einem ersten Druckluftvorrat 20 versorgt. Der erste Druckluftvorrat 20 stellt einen Vorratsdruck pV bereit. An der Vorderachse VA sind zudem erste und zweite Vorderachsbremsaktuatoren 3a, 3b vorgesehen, wobei der erste Vorderachsbremsaktuator 3a für ein erstes Vorderrad, hier rechtes Vorderrad 5a, und der zweie Vorderachsbremsaktuator 3b für ein zweites Vorderrad, hier linkes Vorderrad 5b, vorgesehen ist. Der erste Bremskreis 2 stellt in dieser Ausführungsform (Fig. 2) radgerecht einen Vorderachsbremsdruck pBVA, genauer gesagt einen ersten Vorderachsbremsdruck pBVA1 an dem ersten Vorderachsbremsaktuator 3a und einen zweiten Vorderachsbremsdruck pBVA2 an dem zweiten Vorderachsbremsaktuator 3b bereit.

Der zweite Bremskreis 4, hier der Hinterachsbremskreis, wird von einem zweiten Druckluftvorrat 22 versorgt, der ebenfalls einen Vorratsdruck pV bereitstellt. An der Hinterachse HA sind erste und zweite Hinterachsbremsaktuatoren 8a, 8b vorgesehen, die mittels des zweiten Bremskreises 4 angesteuert werden. Der erste Hinterachsbremsaktuator 8a ist für ein erstes Hinterrad 5c vorgesehen und der zweite Hinterachsbremsaktuator 8b ist für ein zweites Hinterrad 5d vorgesehen. Der zweite Bremskreis 4 stellt radgerecht an dem ersten Hinterachsbremsaktuator 8a einen ersten Hinterachsbremsdruck pBHA1 und an dem zweiten Hinterachsbremsaktuator 8b einen zweiten Hinterachsbremsdruck pBHA2 bereit. Aufgrund der radgerechten Aussteuerung der Bremsdrücke pBVA1, pBVA2, pBHA1 und pBHA2 wird das Fahrzeug 200 auf der Solltrajektorie TSoll gehalten, die von der Solltrajektorien-Steuerung 110 der zentralen Steuereinheit 102 bereitgestellt wird.

Das Bremssystem 101 umfasst in dem gezeigten Ausführungsbeispiel auch einen Parkbremskreis 10, der von einem dritten Druckluftvorrat 24 versorgt wird. Auch der dritte Druckluftvorrat 24 stellt einen Vorratsdruck pV bereit. Der Parkbremskreis 10 verfügt über ein Parkbremsmodul 11, welches den Vorratsdruck pV von dem dritten Druckluftvorrat 24 empfängt. Der Parkbremskreis 10 verfügt ferner über erste und zweite Federspeicheraktuatoren 12a, 12b an der Hinterachse HA des Fahrzeugs 200. In dem in Fig. 2 gezeigten Ausführungsbeispiel sind die ersten und zweiten Federspeicheraktuatoren 12a, 12b mit den ersten und zweiten Hinterachsbremsaktuatoren 8a, 8b integriert zu sogenannten Tristop-Bremszylindern. Das Parkbremsmodul 11 steuert einen Parkbremsdruck pBP an den ersten und zweiten Federspeicheraktuatoren 12a, 12b aus. Federspeicheraktuatoren 12a, 12b sind im Allgemeinen so gestaltet, dass sie drucklos zuspannen und bei Anliegen eines Drucks, der einen bestimmten Druck überschreitet, gegen einen Druck einer Feder öffnen. Solche Federspeicheraktuatoren 12a, 12b sind im Stand der Technik hinlänglich bekannt.

In dem Bremssystem 101 ist die zentrale Steuereinheit 102 über einen Fahrzeug-Bus 120 mit der Einheit für autonomes Fahren 112 verbunden und empfängt von dieser die Solltrajektorie TSoll. Darüber hinaus kann die zentrale Steuereinheit 102 auch weitere Signale wie zum Beispiel einen Verzögerungssollwert ZSoll empfangen. Auch die elektronisch steuerbare Lenkeinrichtung 103 ist über den Fahrzeug-Bus 120 mit dem Bremssystem 101 verbunden und steht so auch in Kommunikation mit der zentralen Steuereinheit 102. Ferner umfasst das Bremssystem 101 wie bereits mit Bezug auf Fig. 1 beschrieben, eine redundante Steuereinheit 104, die hier ebenfalls an den Fahrzeug-Bus 120 angeschlossen ist. Zudem kommunizieren die zentrale Steuereinheit 102 und die redundante Steuereinheit 104 über einen zweiten Bus 122 direkt miteinander und können so Signale, wie beispielsweise den Verzögerungssollwert ZSoll, austauschen. In dem in Fig. 2 gezeigten Ausführungsbeispiel ist die redundante Steuereinheit 104 mit dem Parkbremsmodul 11 integriert. Insbesondere bildet die redundante Steuereinheit 104 gleichzeitig auch eine elektronische Steuereinheit des Parkbremsmoduls 11. Dies ist besonders zweckmäßig, da das Parkbremsmodul 11 in der hier gezeigten Ausführungsform ohnehin eine elektronische Steuereinheit aufweist. Alternativ und ebenfalls bevorzugt ist aber die redundante Steuereinheit 104 ein separates Modul und nicht mit dem Parkbremsmodul 11 integriert.

Die zentrale Steuereinheit 102 bildet in dem hier gezeigten Ausführungsbeispiel auch gleichzeitig einen Hinterachsmodulator und ist unmittelbar an den zweiten Druckluftvorrat 22 angeschlossen. Auch das ist nicht zwingend erforderlich und der Hinterachsmodulator könnte ebenso separat von der zentralen Steuereinheit 102 vorgesehen sein. Die zentrale Steuereinheit 102, die hier den Hinterachsmodulator bildet, steuert dann, basierend auf dem Empfang eines Verzögerungssollwerts ZSoll entsprechende erste und zweite Hinterachsbremsdrücke pBHA1, pBHA2 radgerecht an der Hinterachse HA aus. Die elektronische Steuereinheit 102 verfügt über eine elektronische Stabilitätsregelung ESC1, die hier in diese integriert ist. Die elektronische Stabilitätsregelung ESC1 ist mit ersten und zweiten Vorderachs-Raddrehzahlsensoren 14a, 14b sowie ersten und zweiten Hinterachs-Raddrehzahlsensoren 16a, 16b verbunden. Über diese empfängt die zentrale Steuereinheit 102 erste, zweite, dritte und vierte Raddrehzahlsignale SW1, SW2, SW3, SW4. Diese werden von der zentralen Steuereinheit 102 bzw. der elektronischen Stabilitätsregelung ESC1 dazu verwendet, eine radgerechte Aussteuerung des Hinterachsbremsdrucks pBHA in die ersten und zweiten Hinterachsbremsdrücke pBHA1, pBHA2 zu erzielen, sodass die ersten und zweiten Hinterräder 5c, 5d nicht blockieren.

An der Vorderachse VA ist hier ein Vorderachsmodulator 6 vorgesehen, der keine eigene Intelligenz aufweist. Der Vorderachsmodulator 6 ist direkt mit der zentralen Steuereinheit 102 über eine Vorderachssignalleitung 124 verbunden, über die Vorderachsbremssignale SVB bereitgestellt werden. Aufgrund der Vorderachsbremssignale SVB werden unmittelbar ein oder mehrere elektromagnetische Ventile innerhalb des Vorderachsmodulators 6 geschaltet, um so aus dem an diesem anliegenden Vorratsdruck pV einen Vorderachsbremsdruck pBVA auszusteuern. Der Vorderachsmodulator 6 ist hier als Zweikanalvorderachsmodulator ausgebildet und umfasst einen ersten Vorderachskanal 6.1 und einen zweiten Vorderachskanal 6.2. Zwischen den ersten Vorderachskanal 6.1 und den ersten Vorderachsbremsaktuator 3a ist ein erstes Vorderachs-ABS-Ventil 26 geschaltet. Ebenso ist zwischen den zweiten Vorderachskanal 6.2 und den zweiten Vorderachsbremsaktuator 3b ein zweites Vorderachs-ABS-Ventil 28 geschaltet. Die ersten und zweiten Vorderachs-ABS-Ventile werden von der zentralen Steuereinheit 102 über erste und zweite ABS-Leitungen 126, 128 angesteuert, um so aus dem Vorderachsbremsdruck pBVA die radindividuell ausgesteuerten ersten und zweiten Vorderachsbremsdrücke pBVA1 und pBVA2 abzuleiten bzw. auszusteuern. Dazu verwendet die zentrale Steuereinheit 102 die ersten und zweiten Raddrehzahlsignale SW1, SW2 von den ersten und zweiten Vorderachsraddrehzahlsensoren 14a, 14b.

Schließlich weist das Bremssystem 101 zur manuellen Steuerung, die hier nicht weiter beschrieben werden wird, einen manuellen Bremswertgeber 105 sowie einen manuellen Parkbremsschalter 107 auf. Beide sind im Grunde bekannt und werden hier nicht weiter beschrieben. In der vorliegenden Offenbarung sind insbesondere die Aspekte, die das autonome Betreiben des Bremssystems 101 betreffen, von Interesse.

Für den Fall, dass nun die elektronische Stabilitätsregelung ESC1 des primären Systems, umfassend die zentrale Steuereinheit 102, nicht oder nicht richtig funktioniert, übernimmt die redundante Steuereinheit 104 die Steuerung des Bremssystems 101. Zu diesem Zweck ist die redundante Steuereinheit 104 mit den ersten und zweiten Hinterachs-Raddrehzahlsensoren 16a, 16b verkabelt und empfängt von diesen die dritten und vierten Raddrehzahlsignale SW3, SW4. Da die redundante Steuereinheit 104 mit dem Fahrzeug-Bus 102 verbunden ist und somit sowohl die Sollverzögerung ZSoll als auch die Solltrajektorie TSoll empfängt, ist die redundante Steuereinheit 104 in der Lage, in diesem Fall über die Federspeicheraktuatoren 12a, 12b die Hinterachse HA radindividuell und redundant zu bremsen. Zu diesem Zweck steuert die redundante Steuereinheit 104 einen redundanten Hinterachsbremsdruck pRHA radindividuell für die ersten und zweiten Hinterräder 5c, 5d aus. Die redundante Steuereinheit 104 ist auch mit den ersten und zweiten Vorderachs-Raddrehzahlsensoren 14a, 14b verbunden und empfängt von diesen somit auch die ersten und zweiten Raddrehzahlsignale SW1, SW2. Allerdings kann die redundante Steuereinheit 104 nicht die ersten und zweiten Vorderachs-ABS-Ventile 26, 28 ansteuern. Die redundante Steuereinheit 104 kann nur über eine pneumatische Redundanzdruckleitung 130 einen Redundanzdruck pR an dem Vorderachsmodulator 6 aussteuern, der von diesem dann rein pneumatisch in den Vorderachsredundanzbremsdruck pRVA umgesetzt wird. Dieser ist an der Vorderachse VA nicht radindividuell. Das heißt, in dieser Ausführungsform (Fig. 2) wird die Vorderachse VA achsenweise angesteuert. Die redundante Steuereinheit 104 steuert die Vorderachse VA achsenweise an, während die Hinterachse HA noch radindividuell gebremst wird. An der Vorderachse VA werden aber dennoch über die redundante Verkabelung mit den ersten und zweiten Vorderachs-Raddrehzahlsensoren 14a, 14b die ersten und zweiten Raddrehzahlsignale SW1, SW2 abgegriffen und von der redundanten Steuereinheit 104 über den Fahrzeug-BUS 120 bereitgestellt. Basierend hierauf kann dann die elektronisch steuerbare Lenkeinrichtung 103 querstabilisierende Lenkeingriffe für die Vorderachse VA vornehmen, um die an dieser nicht mehr vorliegende radindividuelle Bremsung auszugleichen und so die Fahrzeugstabilität zu gewährleisten.

In dem hier gezeigten Ausführungsbeispiel umfasst das Bremssystem 101 auch eine redundante elektronische Stabilitätsregelung ESC2, die über einen dritten BUS 132 mit der redundanten Steuereinheit 104 verbunden ist und an dieser redundante Stabilitätssignale SWR bereitstellt. Auch diese können bei der Aussteuerung des Hinterachs-Redundanzbremsdrucks pRHA berücksichtigt werden, sowie auch über den Fahrzeug-BUS 120 für die elektronisch steuerbare Lenkeinrichtung 103 bereitgestellt werden.

Wie sich weiterhin aus Fig. 2 ergibt, ist die zentrale Steuereinheit 102 mit einer ersten Spannungsquelle 106 verbunden, während die redundante Steuereinheit 104 mit einer zweiten Spannungsquelle 108 verbunden ist. Die ersten und zweiten Spannungsquellen 106, 108 sind getrennt, sodass eine Spannungsquelle nicht aufgrund eines Fehlers der anderen ausfällt. Weiterhin stellt die zentrale Steuereinheit 102 ESC-Signale SE1 über den Fahrzeug-Bus 120 bereit, die dann von der elektronisch steuerbaren Lenkeinrichtung 103 empfangen werden können, um diese beim Aussteuern der querstabilisierenden Lenkeingriffe zu berücksichtigen.

Ein zweites Ausführungsbeispiel des Fahrzeugs 200, das ein zweites Ausführungsbeispiel des Fahrzeugsystems 100 umfasst, ist in Fig. 3 dargestellt. Im Folgenden werden die wesentlichen Unterschiede zum ersten Ausführungsbeispiel (Fig. 2) hervorgehoben, während Gemeinsamkeiten nicht weiter beschrieben werden. Für gleiche und ähnliche Elemente sind gleiche Bezugszeichen verwendet, sodass für diese vollumfänglich auf die obige Beschreibung Bezug genommen wird.

Ein erster wesentlicher Unterschied besteht darin, dass in diesem Ausführungsbeispiel (Fig. 3) die Hinterachse HA im Falle, dass die redundante Steuereinheit 104 die Steuerung des Bremssystems 101 übernimmt, achsenweise angesteuert wird. Das heißt, in diesem Ausführungsbeispiel (Fig. 3) wird der Hinterachs-Redundanzbremsdruck pRHA nicht radgerecht ausgesteuert, wie es im ersten Ausführungsbeispiel (Fig. 2) der Fall ist. Vielmehr wird dem linken und rechten Hinterrad 5c, 5d und damit in diesem Ausführungsbeispiel den ersten und zweiten Federspeicheraktuatoren 12a, 12b derselbe Redundanzbremsdruck, nämlich der Hinterachs-Redundanzbremsruck pRHA zugeführt. Dennoch ist auch in diesem Ausführungsbeispiel (Fig. 3) eine redundante Verkabelung zu den Hinterachs-Raddrehzahlsensoren 16a, 16b vorgesehen, die aber auch optional entfallen kann. Es kann beispielsweise vorgesehen sein, dass die redundante Steuereinheit 104 über den Fahrzeug-BUS 120 die dritten und vierten Raddrehzahlsignale SW3, SW4 empfängt und vorzugsweise eine auszusteuernde Lenkkompensation ermittelt. Die redundanten Steuereinheit 104 kann dann die ermittelte Lenkkompensation in Form eines Lenkwinkels oder Lenkmoments als Sollwert an die elektronisch steuerbare Lenkeinrichtung 103 übermitteln, so dass diese die Aussteuerung der querstabilisierenden Lenkeingriffe ausführen kann.

Ferner ist im Gegensatz zum ersten Ausführungsbeispiel (Fig. 2) im zweiten Ausführungsbeispiel (Fig. 3) vorgesehen, dass im Redundanzfall die Vorderachse VA radweise angesteuert werden kann. Während also im ersten Ausführungsbeispiel (Fig. 2) eine achsenweise Ansteuerung der Vorderachse VA im Redundanzfall durch die redundante Steuereinheit 104 erfolgte, wird in dem zweiten Ausführungsbeispiel (Fig. 3) die Vorderachse VA radweise eingebremst.

Zu diesem Zweck sind zunächst weitere ABS-Ventile vorgesehen, nämlich ein erstes Redundanz-ABS-Ventil 30 und ein zweites Redundanz-ABS-Ventil 32. Das erste Redundanz-ABS-Ventil 30 ist zwischen das erste Vorderachs-ABS-Ventil 26 und den ersten Vorderachsbremsaktuator 3a geschaltet. Im Normalbetrieb, wenn das Bremssystem 101 durch die zentrale Steuereinheit 102 gesteuert wird, ist das erste Redundanz-ABS-Ventil 30 unbetätigt und steuert den von dem ersten Vorderachs-ABS-Ventil 26 ausgesteuerten ersten Vorderachsbremsdruck pBVA1 durch und unverändert an dem ersten Vorderachsbremsaktuator 3a aus. Das zweite Redundanz-ABS-Ventil 32 ist in entsprechender Weise zwischen das zweite Vorderachs-ABS-Ventil 28 und den zweiten Vorderachsbremsaktuator 3b geschaltet. Auch dieses ist im Normalbetrieb offen und lässt den zweiten Vorderachsbremsdruck pBVA2 durch. Sowohl das erste als auch das zweite Redundanz-ABS-Ventil 30, 32 sind über erste und zweite Redundanz-ABS-Signalleitungen 134, 136 mit der redundanten Steuereinheit 104 verbunden. Wie auch im ersten Ausführungsbeispiel sind auch die ersten und zweiten Vorderachs-Raddrehzahlsensoren 14a, 14b redundant mit der redundanten Steuereinheit 104 verbunden, sodass diese die ersten und zweiten Raddrehzahlsignale SW1, SW2 empfängt. In dem hier gezeigten zweiten Ausführungsbeispiel (Fig. 3) ist es also möglich, dass im Redundanzfall die Vorderachse VA durch die redundante Steuereinheit 104 radgerecht angesteuert wird. Während wiederum der Vorderachsmodulator 6 zweikanalig ausgebildet ist und an sowohl dem ersten Kanal 6.1 als auch an dem zweiten Kanal 6.2 den nicht weiter modulierten Vorderachsbremsdruck pBVA bereitstellt und in diesem Fall dann die ersten und zweiten Vorderachs-ABS-Ventile 26, 28 den Vorderachsbremsdruck pBVA offen durchsteuern, können die ersten und zweiten Redundanz-ABS-Ventile 30, 32 diesen Druck modulieren, um so den Vorderachs-Redundanzbremsdruck radgerecht als ersten Vorderachs-Redundanzbremsdruck pRVA1 dem ersten Vorderachsbremsaktuator 3a und den zweiten Vorderachs-Redundanzbremsdruck pRVA2 radgerecht dem zweiten Vorderachsbremsaktuator 3b zur Verfügung zu stellen.

Während also im ersten Ausführungsbeispiel (Fig. 2) nur die Vorderachse VA achsenweise angesteuert wird, während die Hinterachse HA radweise angesteuert wird, wird im zweiten Ausführungsbeispiel (Fig. 3) nur die Hinterachse HA achsenweise angesteuert, während die Vorderachse VA radgerecht angesteuert wird. Es soll aber verstanden werden, dass es auch Ausführungsformen geben kann, in denen sowohl die Vorderachse VA als auch die Hinterachse HA im Redundanzfall achsenweise angesteuert werden. Für den Fall, dass weitere Achsen vorgesehen sind, wie beispielsweise eine zweite Hinterachse, eine zweite Vorderachse oder eine Zusatzachse, können auch diese Achsen im Redundanzfall achsenweise angesteuert werden. Es ist dabei nicht erforderlich, dass sämtliche Achsen im Redundanzfall achsenweise angesteuert werden, vielmehr ist es ausreichend, wenn nur eine dieser Achsen achsenweise angesteuert wird.

Dies ist insbesondere auch in Fig. 4 illustriert. Fig. 4 zeigt ein Fahrzeug 200, nämlich ein Nutzfahrzeug 202, das ein Fahrzeugsystem 100 gemäß der Erfindung umfasst, auf einer Kurvenfahrt. Illustrativ ist die der Kurvenverlauf einer Solltrajektorie TSoll eingezeichnet, die hier einer Rechtskurve entspricht. Um die Solltrajektorie TSoll herum ist ein Toleranzkorridor TK eingezeichnet. Innerhalb dieses Toleranzkorridors TK soll das Fahrzeug 200 gehalten werden, auch im Redundanzfall, wenn querstabilisierende Lenkeingriffe mittels der elektronisch steuerbaren Lenkeinrichtung 103 durchgeführt werden. An dem Fahrzeug 200 ist sowohl eine Vorderachs-Seitenführungskraft FV als auch eine Hinterachs-Seitenführungskraft FH eingezeichnet. Da sich das Fahrzeug 200 im Redundanzbetrieb befindet und die redundante elektronische Steuereinheit 104 die Steuerung übernommen hat, wird an der Vorderachse VA ein Vorderachs-Redundanzbremsdruck pRVA und an der Hinterachse HA ein Hinterachs-Redundanzbremsdruck pRHA ausgesteuert.

Werden nun verschiedene Seitenführungskräfte FV, FH ermittelt, ist es bevorzugt, an derjenigen Fahrzeugachse aus Vorderachse VA und Hinterachse HA die Bremsdruckaussteuerung des Vorderachs-Redundanzbremsdrucks pRVA bzw. Hinterachs-Redundanzbremsdrucks pRHA zu erhöhen, an der die höhere Seitenführungskraft FV, FH anliegt. Ist beispielsweise die Vorderachs-Seitenführungskraft FV größer als die Hinterachs-Seitenführungskraft FH, ist es bevorzugt, das Bremsdruckniveau des Vorderachs-Redundanzbremsdrucks pRVA zu erhöhen. Hierdurch kann die Fahrzeugstabilität erhöht werden.

Wenn während der Kurvenfahrt entlang der Solltrajektorie TSoll ein Übersteuern TO festgestellt wird, ist es bevorzugt, die Bremsdruckaussteuerung des Vorderachs-Redundanzbremsdrucks pRVA an der Vorderachse VA und optional an dem Anhänger 204 (vgl. Fig. 2) zu erhöhen. Hierdurch wird mehr "über die Vorderachse geschoben", sodass aus der Übersteuerung TO herausgekommen werden kann. Gleichzeitig ist es bevorzugt, dass mittels der elektronisch steuerbaren Lenkeinrichtung 103 in Richtung Kurven außen gelenkt wird, um das Übersteuern TO weiter zu reduzieren. Üblicherweise können solche Eingriffe im Normalbetrieb durch die radgerechte Aussteuerung des Vorderachsbremsdrucks pBVA erreicht werden. Da aber im Redundanzbetrieb gemäß dem hier gezeigten Ausführungsbeispiel (Fig. 4) sowohl die Vorderachse VA als auch die Hinterachse HA achsenweise eingebremst werden, ist es erforderlich, dass in diesem Fall die elektronisch steuerbare Lenkeinrichtung 103 querstabilisierende Lenkeingriffe, in diesem Fall eine Lenkung in Richtung Kurven außen, ausführt, um das Fahrzeug 200 so auf der Solltrajektorie TSoll bzw. innerhalb des Toleranzkorridors TK zu halten.

Wird im Gegensatz dazu ein Untersteuern TU des Fahrzeugs 200 festgestellt, wird vorzugsweise die Bremsdruckaussteuerung des Hinterachs-Redundanzbremsdrucks pRHA an der Hinterachse HA erhöht. Optional wird auch die Bremsdruckaussteuerung an einem Anhänger 204 erhöht. Hierdurch wird zunächst die Fahrzeuggeschwindigkeit bei gleichzeitiger erhöhter Traktion der Vorderachse VA reduziert, sodass aus der Untersteuerung herausgekommen werden kann, um das Fahrzeug 200 so auf der Solltrajektorie TSoll zu halten.

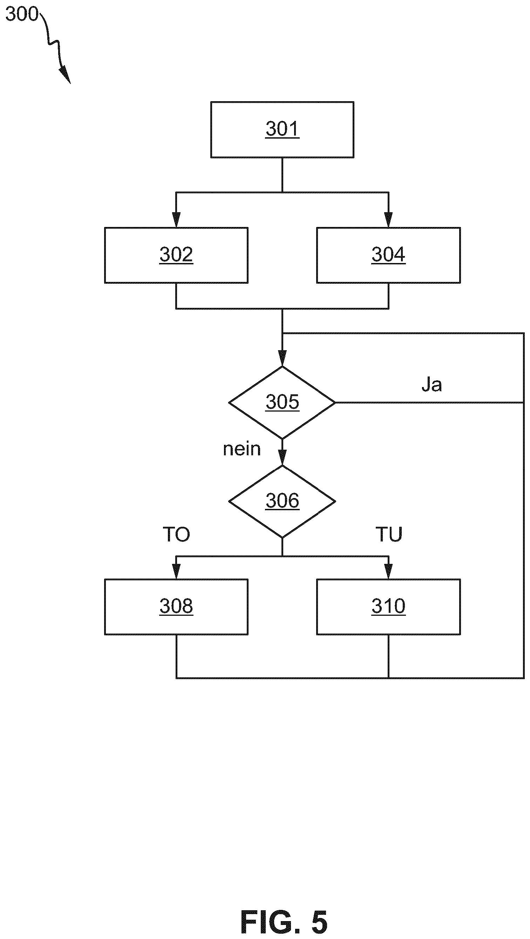

Fig. 5 illustriert nun nochmals rein schematisch ein Verfahren 300 zum Verzögern und Lenken eines Fahrzeugs 200, insbesondere eines Nutzfahrzeugs 202, welches ein Fahrzeugsystem 100 nach einer der vorstehend beschriebenen bevorzugten Ausführungsformen eines Fahrzeugsystems 100 der Erfindung umfasst.

Das Verfahren 300 beginnt mit dem Schritt des Ermittelns 301 eines Ausfalls einer elektronischen Stabilitätsregelung ESC1 (s. Figuren 2 und 3) des elektronisch steuerbaren pneumatischen Bremssystems 101. In Antwort hierauf wird, wie vorstehend beschrieben, ein redundantes und achsenweises Aussteuern 302 des Vorderachs-Redundanzbremsdrucks pRVA bzw. des Hinterachs-Redundanzbremsdrucks pRHA ausgeführt. Gleichzeitig werden je nach Bedarf querstabilisierende Lenkeingriffe 304 ausgeführt, nämlich mittels der elektronisch steuerbaren Lenkeinrichtung 103, wie insbesondere vorstehend beschrieben. Hierdurch soll das Fahrzeug 200 dann in dem Toleranzkorridor TK (vgl. Fig. 4) der vorgegebenen Solltrajektorie TSoll gehalten werden.

In Schritt 305 wird dann überprüft, ob sich das Fahrzeug 200 nach wie vor auf der Solltrajektorie TSoll befindet. Ist dies der Fall, wird vor den Schritt 305 zurückgekehrt und wiederum geprüft, ob sich das Fahrzeug 200 nach wie vor auf der Solltrajektorie TSoll befindet. Ist dies allerdings nicht der Fall, wird in Schritt 306 überprüft, ob ein Über- oder Untersteuern vorliegt. Wird ein Übersteuern TO ermittelt, werden vorzugsweise in Schritt 308 die Bremsdruckaussteuerung des Vorderachs-Redundanzbremsdrucks pRVA der Vorderachse VA erhöht und gleichzeitig mittels der elektronisch steuerbaren Lenkeinrichtung 103 in Richtung Kurven außen gelenkt. Wird allerdings ein Untersteuern TU ermittelt, wird vorzugsweise in Schritt 310 die Bremsdruckaussteuerung des Hinterachs-Redundanzbremsdrucks pRHA an der Hinterachse HA erhöht. Anschließend kehrt das Verfahren wieder zur Überprüfung zurück, ob sich das Fahrzeug 200 auf der Solltrajektorie TSoll bzw. innerhalb des Toleranzkorridors TK befindet.

### Bezugszeichenliste (Teil der Beschreibung)

- 2: erster Bremskreis
- 3a, 3b: erste und zweite Vorderachsbremsaktuatoren
- 4: zweiter Bremskreis
- 5a, 5b: erstes und zweites Vorderrad
- 5c, 5d: erstes und zweites Hinterrad
- 6: Vorderachsmodulator
- 6.1: erster Vorderachskanal
- 6.2: zweiter Vorderachskanal
- 8a, 8b: erste und zweite Hinterachsbremsaktuatoren
- 10: Parkbremskreis
- 12a, 12b: erste und zweite Federspeicheraktuatoren
- 14a, 14b: erste und zweite Vorderachs-Raddrehzahlsensoren
- 16a, 16b: erste und zweite Hinterachs-Raddrehzahlsensoren
- 20: erster Druckluftvorrat
- 22: zweiter Druckluftvorrat
- 24: dritter Druckluftvorrat
- 26: erstes Vorderachs-ABS-Ventil
- 28: zweites Vorderachs-ABS-Ventil
- 30: erstes Redundanz-ABS-Ventil
- 32: zweites Redundanz-ABS-Ventil
- 100: Fahrzeugsystem
- 101: elektronisch steuerbares pneumatisches Bremssystem
- 102: zentrale Steuereinheit
- 104: redundante Steuereinheit
- 106: ersten Spannungsquelle
- 108: zweite Spannungsquelle
- 110: Solltrajektorien-Steuerung
- 112: Einheit für autonomes Fahren
- 114: Sekundäre Vorderachs-Bremssteuerung
- 116: Sekundäre Hinterachs-Bremssteuerung
- 118: Sekundäre Anhänger-Bremssteuerung
- 120: Fahrzeug-BUS
- 122: Zweiter BUS
- 124: Vorderachssignalleitung
- 126: erste ABS-Signalleitung
- 128: zweite ABS-Signalleitung
- 130: pneumatische Redundanzdruckleitung
- 132: dritter BUS
- 134: erste Redundanz-ABS-Signalleitung
- 136: zweite Redundanz-ABS-Signalleitung
- 200: Fahrzeug
- 202: Nutzfahrzeug
- 204: Anhänger
- 300: Verfahren
- 301-310: Schritte
- 11: Parkbremsmodul
- 103: elektronisch steuerbare Lenkeinrichtung
- ESC1: elektronische Stabilitätsregelung
- ESC2: redundante elektronische Stabilitätsregelung
- FH: Vorderachs-Seitenführungskraft
- FV: Hinterachs-Seitenführungskraft
- HA: Hinterachse
- HA2: weitere Hinterachse
- LW: Lenkradwinkel
- LM: Lenkmoment
- pBHA: Hinterachsbremsdruck
- pBHA1: erster Hinterachsbremsdruck
- pBHA2: zweiter Hinterachsbremsdruck
- pBP: Parkbremsdruck
- pBVA: Vorderachsbremsdruck
- pBVA1: erster Vorderachsbremsdruck
- pBVA2: Zweiter Vorderachsbremsdruck
- pRHA: Hinterachs-Redundanzbremsdruck
- pRVA: Vorderachs-Redundanzbremsdruck
- pRVA1: erster Vorderachs-Redundanzbremsdruck
- pRVA2: zweiter Vorderachs-Redundanzbremsdruck
- TO: Übersteuern
- TK: Toleranzkorridor
- TSoll: Solltrajektorie
- TU: Untersteuern
- SBR: redundante Bremssignale
- SER: redundante ESC-Signale
- SVB: Vorderachsbremssignal
- SW1: erstes Raddrehzahlsignal
- SW2: zweites Raddrehzahlsignal
- SW3: drittes Raddrehzahlsignal
- SW4: viertes Raddrehzahlsignal
- VA: Vorderachse
- WSoll: Sollwert für querstabilisierende Lenkeingriffe
- ZSoll: Verzögerungssollwert

## Patentansprüche

1. Fahrzeugsystem (100) für ein Fahrzeug (200), insbesondere Nutzfahrzeug (202), mit:
einem elektronisch steuerbaren pneumatischen Bremssystem (101), und einer elektronisch steuerbaren Lenkeinrichtung (103);
wobei das elektronisch steuerbare pneumatische Bremssystem (101) mindestens einen ersten Bremskreis (2), mindestens einen zweiten Bremskreis (4), eine zentrale Steuereinheit (102) zum Steuern des ersten und zweiten Bremskreises (2, 4), und wenigstens erste und zweite Vorderachsbremsaktuatoren (3a, 3b) für wenigstens erste und zweite Vorderräder (5a, 5b) an wenigstens einer Vorderachse (VA) sowie wenigstens erste und zweite Hinterachsbremsaktuatoren (8a, 8b) für wenigstens erste und zweite Hinterräder (5c, 5d) an wenigstens einer Hinterachse (HA) aufweist,
wobei die zentrale Steuereinheit (102) eine elektronische Stabilitätsregelung (ESC1) aufweist oder mit dieser verbunden ist, die zum radindividuellen Betätigen der ersten und zweiten Vorderachsbremsaktuatoren (3a, 3b) und/oder der ersten und zweiten Hinterachsbremsaktuatoren (8a, 8b) ausgebildet ist;
wobei das elektronisch steuerbare pneumatische Bremssystem (100) ferner eine redundante Steuereinheit (104) umfasst, die im Falle eines Ausfalls der elektronischen Stabilitätsregelung (ESC1) während einer Fahrt des Fahrzeugs (200) den ersten Bremskreis (2) und/oder den zweiten Bremskreis (4) steuert,
**dadurch gekennzeichnet, dass** im Falle des Ausfalls der elektronischen Stabilitätsregelung (ESC1) während einer Fahrt des Fahrzeugs (200) die redundante Steuereinheit (104) wenigstens die Vorderachse (VA) mit einem Vorderachs-Redundanzbremsdruck (pRVA) und/oder die Hinterachse (HA) mit einem Hinterachs-Redundanzbremsdruck (pRHA) achsenweise ansteuert, und dass die elektronisch steuerbare Lenkeinrichtung (103) querstabilisierende Lenkeingriffe ausführt zum Halten des Fahrzeugs (200) in einem Toleranzkorridor (TK) einer vorgegebenen Solltrajektorie (TSoll) des Fahrzeugs (200), und
wobei die elektronisch steuerbare Lenkeinrichtung (103) mit der zentralen Steuereinheit (102) verbunden ist zum Empfangen von ESC-Signalen (SE1) der elektronischen Stabilitätsregelung (ESC1) oder aus diesen abgeleiteten oder aufbereiteten Signalen.

2. Fahrzeugsystem (100) nach Anspruch 1, wobei die elektronisch steuerbare Lenkeinrichtung (103) einen Lenkradwinkel (LW) und/oder ein Lenkmoment (LM) als Sollwert (WSoll) für die querstabilisierenden Lenkeingriffe empfängt und diesen ausregelt.

3. Fahrzeugsystem (100) nach einem der vorstehenden Ansprüche, aufweisend eine redundante elektronische Stabilitätsregelung (ESC2), die mit der redundanten Steuereinheit (104) verbunden ist und an dieser redundante ESC-Signale (SER) bereitstellt.

4. Fahrzeugsystem (100) nach Anspruch 1 oder 3, wobei die elektronisch steuerbare Lenkeinrichtung (103) mit der redundanten Steuereinheit (104) und/oder der redundanten elektronischen Stabilitätsregelung (ESC2) verbunden ist zum Empfangen von redundanten ESC-Signalen (SER).

5. Fahrzeugsystem (100) nach einem der vorstehenden Ansprüche, wobei die zentrale Steuereinheit (102) mit einer ersten Spannungsquelle (106) und die redundante Steuereinheit (104) mit einer zweiten Spannungsquelle (108) verbunden ist, die unabhängig von der ersten Spannungsquelle (106) ist.

6. Fahrzeugsystem (100) nach Anspruch 5, wobei die elektronisch steuerbare Lenkeinrichtung (103) oder ein Teil von dieser mit der zweiten Spannungsquelle (108) verbunden ist.

7. Fahrzeugsystem (100) nach einem der vorstehenden Ansprüche, wobei die redundante Steuereinheit (104) mit ersten und/oder zweiten Raddrehzahlsensoren (14a, 14b, 16a, 16b) verbunden ist, zum Empfangen von Raddrehzahlsignalen (SW1, SW2, SW3, SW4).

8. Fahrzeugsystem (100) nach einem der vorstehenden Ansprüche, ferner aufweisend einen Parkbremskreis (10) mit einem mit der zentralen Steuereinheit (102) verbundenen Parkbremsmodul (11), sowie wenigstens ersten und zweiter Federspeicheraktuatoren (12a, 12b) wenigstens an der Hinterachse (HA) oder einer weiteren Hinterachse (HA2), wobei die redundante Steuereinheit (104) eine elektronische Steuereinheit des Parkbremsmoduls (11) bildet oder mit dieser integriert ist.

9. Fahrzeugsystem (100) nach einem der vorstehenden Ansprüche, wobei die redundante Steuereinheit (104) im Falle des Ausfalls der elektronischen Stabilitätsregelung (ESC1) bei dem achsenweisen Aussteuern des Vorderachs-Redundanzbremsdruck (pRVA) diesen den ersten und zweiten Vorderachsbremsaktuatoren (3a, 3b) bereitstellt, um so die Vorderachse (VA) achsenweise zu bremsen.

10. Verfahren (300) zum Verzögern und Lenken eines Fahrzeugs (200), insbesondere Nutzfahrzeugs (202), vorzugsweise aufweisend ein Fahrzeugsystem (100) nach einem der vorstehenden Ansprüche, wobei das Verfahren die Schritte umfasst:
- Ermitteln (301) eines Ausfalls einer elektronischen Stabilitätsregelung (ESC1) eines elektronisch steuerbaren pneumatischen Bremssystems (101);
in Antwort auf das Ermitteln des Ausfalls:
- redundantes und achsenweises Aussteuern (302) von einem Redundanz-Vorderachsbremsdruck (pRVA) an wenigstens einer Vorderachse (VA) und/oder von einem Redundanz-Hinterachsbremsdruck (pRHA) an wenigstens einer Hinterachse (HA) mittels einer redundanten Steuereinheit (104) des elektronisch steuerbaren pneumatischen Bremssystems (101), und
- Ausführen von querstabilisierenden Lenkeingriffen (304) durch eine elektronisch steuerbare Lenkeinrichtung (103) zum Halten des Fahrzeugs (200) in einem Toleranzkorridor (TK) einer vorgegebenen Solltrajektorie (Tsoll) des Fahrzeugs (200) und weiter umfassend die Schritte:
- Ermitteln eines Übersteuern (TO) des Fahrzeugs (200); und
in Antwort hierauf:
- Erhöhen einer Bremsdruckaussteuerung (pRVA, pRHA) des Redundanz-Vorderachsbremsdrucks (pRVA) an der Vorderachse (VA) und optional an einem Anhänger (204); und
- Lenken mittels der elektronisch steuerbaren Lenkeinrichtung (103) in Richtung kurvenaußen oder
- Ermitteln eines Untersteuern (TU) des Fahrzeugs (200); und
in Antwort hierauf:
- Erhöhen einer Bremsdruckaussteuerung (pRVA, pRHA) des Redundanz-Hinterachsbremsdrucks (pRHA) an der Hinterachse (HA) und optional an einem Anhänger (204).

11. Verfahren nach Anspruch 10, umfassend die Schritte:
- Ermitteln einer Vorderachs-Seitenführungskraft (FV) an der Vorderachse (VA);
- Ermitteln einer Hinterachs-Seitenführungskraft (FH) an der Hinterachse (HA);
wobei die redundante Steuereinheit (104) eine Bremsdruckaussteuerung (pRVA, pRHA) an derjenigen Fahrzeugachse aus Vorderachse (VA) und Hinterachse (HA) erhöht, an der die höhere aus Vorderachs-Seitenführungskraft (FV) und Hinterachs-Seitenführungskraft (FH) ermittelt ist.

12. Fahrzeug (200), insbesondere Nutzfahrzeug (202), mit einem Fahrzeugsystem (100) nach einem der Ansprüche 1 bis 9.

## Claims

1. Vehicle system (100) for a vehicle (200), in particular a commercial vehicle (202), comprising:
an electronically controllable pneumatic brake system (101), and an electronically controllable steering device (103);
wherein the electronically controllable pneumatic brake system (101) has at least one first brake circuit (2), at least one second brake circuit (4), a central control unit (102) for controlling the first and second brake circuit (2, 4), and at least first and second front axle brake actuators (3a, 3b) for at least first and second front wheels (5a, 5b) on at least one front axle (VA), and at least first and second rear axle brake actuators (8a, 8b) for at least first and second rear wheels (5c, 5d) on at least one rear axle (HA),
wherein the central control unit (102) has or is connected to an electronic stability control means (ESC1), which is designed for wheel-specific actuation of the first and second front axle brake actuators (3a, 3b) and/or the first and second rear axle brake actuators (8a, 8b);
wherein the electronically controllable pneumatic brake system (100) further comprises a redundant control unit (104) which, in the event of a failure of the electronic stability control means (ESC1) while the vehicle (200) is traveling, controls the first brake circuit (2) and/or the second brake circuit (4),
**characterized in that,** in the event of failure of the electronic stability control means (ESC1) while the vehicle (200) is traveling, the redundant control unit (104) controls at least the front axle (VA) using a front axle redundancy brake pressure (pRVA) and/or the rear axle (HA) using a rear axle redundancy brake pressure (pRHA) on an axle-specific basis, **and in that** the electronically controllable steering device (103) performs transversely stabilizing steering interventions in order to keep the vehicle (200) within a tolerance corridor (TK) of a predetermined target trajectory (TSoll) of the vehicle (200), and wherein the electronically controllable steering device (103) is connected to the central control unit (102) in order to receive ESC signals (SE1) from the electronic stability control means (ESC1) or signals derived therefrom or processed thereby.

2. Vehicle system (100) according to claim 1, wherein the electronically controllable steering device (103) receives and regulates a steering wheel angle (LW) and/or a steering torque (LM) as a target value (WSoll) for the transversely stabilizing steering interventions.

3. Vehicle system (100) according to either of the preceding claims, comprising a redundant electronic stability control means (ESC2) which is connected to the redundant control unit (104) and provides redundant ESC signals (SER) thereto.

4. Vehicle system (100) according to claim 1 or 3, wherein the electronically controllable steering device (103) is connected to the redundant control unit (104) and/or the redundant electronic stability control means (ESC2) in order to receive redundant ESC signals (SER).

5. Vehicle system (100) according to any of the preceding claims, wherein the central control unit (102) is connected to a first voltage source (106) and the redundant control unit (104) is connected to a second voltage source (108) which is independent of the first voltage source (106).

6. Vehicle system (100) according to claim 5, wherein the electronically controllable steering device (103) or a part thereof is connected to the second voltage source (108).

7. Vehicle system (100) according to any of the preceding claims, wherein the redundant control unit (104) is connected to first and/or second wheel-speed sensors (14a, 14b, 16a, 16b) in order to receive wheel-speed signals (SW1, SW2, SW3, SW4).

8. Vehicle system (100) according to any of the preceding claims, further comprising a parking brake circuit (10) having a parking brake module (11) connected to the central control unit (102), and at least first and second spring-type actuators (12a, 12b) at least on the rear axle (HA) or a further rear axle (HA2), wherein the redundant control unit (104) forms an electronic control unit of the parking brake module (11) or is integrated therewith.

9. Vehicle system (100) according to any of the preceding claims, wherein, in the event of failure of the electronic stability control means (ESC1), during the axle-specific modulation of the front axle redundancy brake pressure (pRVA), the redundant control unit (104) provides the front axle redundancy brake pressure to the first and second front axle brake actuators (3a, 3b) in order to brake the front axle (VA) in an axle-specific manner.

10. Method (300) for decelerating and steering a vehicle (200), in particular a commercial vehicle (202), preferably comprising a vehicle system (100) according to any of the preceding claims, wherein the method comprises the steps of:
- determining (301) a failure of an electronic stability control means (ESC1) of an electronically controllable pneumatic brake system (101);
in response to determining the failure:
- modulating (302), redundantly and axle-by-axle, a redundancy front axle brake pressure (pRVA) on at least one front axle (VA) and/or a redundancy rear axle brake pressure (pRHA) on at least one rear axle (HA) by means of a redundant control unit (104) of the electronically controllable pneumatic brake system (101), and
- performing transverse stabilizing steering interventions (304) by an electronically controllable steering device (103) in order to keep the vehicle (200) within a tolerance corridor (TK) of a predetermined target trajectory (Tsoll) of the vehicle (200), and further comprising the steps of:
- determining oversteering (TO) of the vehicle (200); and in response thereto:
- increasing a brake pressure modulation (pRVA, pRHA) of the redundancy front axle brake pressure (pRVA) on the front axle (VA) and optionally on a trailer (204); and
- steering by means of the electronically controllable steering device (103) toward the outside of the curve or
- determining understeering (TU) of the vehicle (200); and
in response thereto:
- increasing a brake pressure modulation (pRVA, pRHA) of the redundancy rear axle brake pressure (pRVA) on the rear axle (HA) and optionally on a trailer (204).

11. Method according to claim 10, comprising the steps of:
- determining a front axle cornering force (FV) on the front axle (VA);
- determining a rear axle cornering force (FH) on the rear axle (HA);
wherein the redundant control unit (104) increases a brake pressure modulation (pRVA, pRHA) on the particular vehicle axle, of the front axle (VA) and rear axle (HA), on which the higher force, of the front axle cornering force (FV) and the rear axle cornering force (FH), is determined.

12. Vehicle (200), in particular a commercial vehicle (202), comprising a vehicle system (100) according to any of claims 1 to 9.

## Revendications

1. Système de véhicule (100) pour un véhicule (200), en particulier un véhicule utilitaire (202), comportant :
un système de freinage (101) pneumatique à commande électronique et un dispositif de direction (103) à commande électronique ;
dans lequel le système de freinage (101) pneumatique à commande électronique présente au moins un premier circuit de freinage (2), au moins un second circuit de freinage (4), une unité de commande (102) centrale pour la commande des premier et second circuits de freinage (2, 4), et au moins des premier et second actionneurs de freinage d'essieu avant (3a, 3b) pour au moins des première et seconde roues avant (5a, 5b) sur au moins un essieu avant (VA) ainsi qu'au moins des premier et second actionneurs de freinage d'essieu arrière (8a, 8b) pour au moins des première et seconde roues arrière (5c, 5d) sur au moins un essieu arrière (HA),
dans lequel l'unité de commande (102) centrale présente un moyen de contrôle de stabilité (ESC1) électronique ou est reliée à celui-ci, lequel moyen de contrôle de la stabilité électronique est conçu pour actionner individuellement par roue les premier et second actionneurs de freinage d'essieu avant (3a, 3b) et/ou les premier et second actionneurs de freinage d'essieu arrière (8a, 8b) ;
dans lequel le système de freinage (100) pneumatique à commande électronique comprend en outre une unité de commande (104) redondante qui commande le premier circuit de freinage (2) et/ou le second circuit de freinage (4) en cas de défaillance du moyen de contrôle de stabilité (ESC1) électronique pendant un déplacement du véhicule (200),
**caractérisé en ce que,** en cas de défaillance du moyen de contrôle de stabilité (ESC1) électronique pendant un déplacement du véhicule (200), l'unité de commande (104) redondante commande, par essieu, au moins l'essieu avant (VA) avec une pression de freinage redondante d'essieu avant (pRVA) et/ou l'essieu arrière (HA) avec une pression de freinage redondante d'essieu arrière (pRHA), **et en ce que** le dispositif de direction (103) à commande électronique exécute des interventions de stabilisation transversale sur la direction pour maintenir le véhicule (200) dans un corridor de tolérance (TK) d'une trajectoire de consigne (TSoll) prédéfinie du véhicule (200), et
dans lequel le dispositif de direction (103) à commande électronique est relié à l'unité de commande (102) centrale pour recevoir des signaux ESC (SE1) du moyen de contrôle de stabilité (ESC1) électronique ou des signaux dérivés ou modifiés à partir de ceux-ci.

2. Système de véhicule (100) selon la revendication 1, dans lequel le dispositif de direction (103) à commande électronique reçoit un angle de volant de direction (LW) et/ou un couple de direction (LM) comme valeur de consigne (WSoll) pour les interventions de stabilisation transversale sur la direction et régule celle-ci.

3. Système de véhicule (100) selon l'une des revendications précédentes, présentant un moyen de contrôle de stabilité (ESC2) électronique redondant relié à l'unité de commande (104) redondante et fournissant à celle-ci des signaux ESC (SER) redondants.

4. Système de véhicule (100) selon la revendication 1 ou 3, dans lequel le dispositif de direction (103) à commande électronique est relié à l'unité de commande (104) redondante et/ou au moyen de contrôle de stabilité (ESC2) électronique redondant pour la réception de signaux ESC (SER) redondants.

5. Système de véhicule (100) selon l'une des revendications précédentes, dans lequel l'unité de commande (102) centrale est reliée à une première source de tension (106) et l'unité de commande (104) redondante est reliée à une seconde source de tension (108) qui est indépendante de la première source de tension (106).

6. Système de véhicule (100) selon la revendication 5, dans lequel le dispositif de direction (103) à commande électronique ou une partie de celui-ci est reliée à la seconde source de tension (108).

7. Système de véhicule (100) selon l'une des revendications précédentes, dans lequel l'unité de commande (104) redondante est reliée à des premier et/ou seconds capteurs de vitesse de rotation de roues (14a, 14b, 16a, 16b) pour la réception de signaux de vitesse de rotation de roues (SW1, SW2, SW3, SW4).

8. Système de véhicule (100) selon l'une des revendications précédentes, présentant en outre un circuit de freinage de stationnement (10) comportant un module de freinage de stationnement (11) relié à l'unité de commande (102) centrale, ainsi qu'au moins des premier et second actionneurs à accumulateur à ressort (12a, 12b) au moins sur l'essieu arrière (HA) ou un autre essieu arrière (HA2), dans lequel l'unité de commande (104) redondante forme une unité de commande électronique du module de freinage de stationnement (11) ou est intégrée dans ladite unité de commande électronique.

9. Système de véhicule (100) selon l'une des revendications précédentes, dans lequel, en cas de défaillance du moyen de contrôle de stabilité (ESC1) électronique lors de la modulation, par essieu, de la pression de freinage redondante d'essieu avant (pRVA), l'unité de commande (104) redondante fournit celle-ci aux premier et second actionneurs de freinage d'essieu avant (3a, 3b) de manière à freiner l'essieu avant (VA) par essieu.

10. Procédé (300) de décélération et de direction d'un véhicule (200), en particulier d'un véhicule utilitaire (202), présentant de préférence un système de véhicule (100) selon l'une des revendications précédentes, dans lequel le procédé comprend les étapes consistant à :
- détecter (301) une défaillance d'un moyen de contrôle de stabilité (ESC1) électronique d'un système de freinage (101) pneumatique à commande électronique ;
en réponse à la détection de la défaillance :
- moduler (302), de manière redondante et par essieu, une pression de freinage redondante d'essieu avant (pRVA) sur au moins un essieu avant (VA) et/ou une pression de freinage redondante d'essieu arrière (pRHA) sur au moins un essieu arrière (HA) à l'aide d'une unité de commande (104) redondante du système de freinage (101) pneumatique à commande électronique, et
- exécuter des interventions de stabilisation transversale sur la direction (304) à travers un dispositif de direction (103) à commande électronique pour maintenir le véhicule (200) dans un corridor de tolérance (TK) d'une trajectoire de consigne (Tsoll) prédéfinie du véhicule (200), et comprenant en outre les étapes consistant à :
- détecter un survirage (TO) du véhicule (200) ; et
en réponse à cela :
- augmenter une modulation de pression de freinage (pRVA, pRHA) de la pression de freinage redondante d'essieu avant (pRVA) sur l'essieu avant (VA) et, éventuellement, sur une remorque (204) ; et
- diriger à l'aide du dispositif de direction (103) à commande électronique en direction de l'extérieur du virage ou
- détecter un sous-virage (TU) du véhicule (200) ; et
en réponse à cela :
- augmenter une modulation de pression de freinage (pRVA, pRHA) de la pression de freinage redondante d'essieu arrière (pRHA) sur l'essieu arrière (HA) et, éventuellement, sur une remorque (204).

11. Procédé selon la revendication 10, comprenant les étapes consistant à :
- détecter une force de guidage latéral d'essieu avant (FV) au niveau de l'essieu avant (VA) ;
- détecter une force de guidage latéral d'essieu arrière (FH) au niveau de l'essieu arrière (HA) ;
dans lequel l'unité de commande (104) redondante augmente une modulation de pression de freinage (pRVA, pRHA) au niveau de l'essieu du véhicule parmi l'essieu avant (VA) et l'essieu arrière (HA) sur lequel la plus élevée parmi la force de guidage latéral d'essieu avant (FV) et la force de guidage latéral d'essieu arrière (FH) est détectée.

12. Véhicule (200), en particulier véhicule utilitaire (202), comportant un système de véhicule (100) selon l'une des revendications 1 à 9.
